(19)

Europäisches
Patentamt
European
Patent Office
Office européen
des brevets

(11) **EP 1 892 860 A2**

(12) **EUROPEAN PATENT APPLICATION**

(43) Date of publication:
**27.02.2008 Bulletin 2008/09**

(51) Int Cl.:
**H04B 17/00** *(2006.01)* **H04L 1/00** *(2006.01)*

(21) Application number: **07107292.0**

(22) Date of filing: **01.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **23.08.2006 JP 2006226374**

(71) Applicant: **Fujitsu Ltd.**
**Kawasaki-shi, Kanagawa 211-8588 (JP)**

(72) Inventor: **Kimura, Dai**
**c/o FUJITSU LIMITED,**
**Kawasaki-shi, Kanagawa 211-8588 (JP)**

(74) Representative: **Wilding, Frances Ward**
**Haseltine Lake**
**Lincoln House**
**300 High Holborn**
**London WC1V 7JH (GB)**

(54) **Communication device and SIR estimation method thereof**

(57) A SIR estimation method for a communication apparatus that performs communication by a single-carrier frequency division multiple access (SC-FDMA) transmission method, wherein estimated channel values for each sub carrier within a signal bandwidth and weight coefficients used in frequency equalization are used to estimate an SIR, which is a ratio of the signal and interference, of a specified transmitting antenna.

*FIG. 5*

EP 1 892 860 A2

**Description**

BACKGROUND OF THE INVENTION

The present invention relates to a communication device and SIR estimation method thereof, and more particularly to a communication device and SIR estimation thereof that perform communication by a single-carrier frequency-division-multiplex-access (SC-FDMA) transmission method.

A radio propagation path is constantly changing, so it becomes necessary that signals are transmitted in accordance to the state of the propagation path. One example of doing this is a method that controls the transmission power in accordance to the state of the propagation path. By increasing the transmission power when the state of the propagation path is poor, it is possible to maintain the reception quality at a receiving apparatus at a certain level. However, in this method, the transmission power changes, so it is likely that interference characteristics with respect to other receiving apparatuses or adjacent cells could change.

Therefore, as a different way of thinking, is a method that keeps the transmission power constant and changes modulation parameters (data-modulation method, encoding rate, etc.) to correspond with the state of the propagation path. This method is called adaptive modulation and coding (AMC). Data is generally encoded using some sort of channel coding scheme, and then modulated using various multivalue-modulation schemes. The larger the number of multivalue of the data-modulation method is, and the closer the encoding rate R for error correction is to '1', the amount of data that is transmitted one time becomes large, so endurance to transmission error becomes weak. By increasing the multivalue and bringing the encoding rate R close to '1' when the state of the propagation path is good, the transmission throughput becomes high. 0n the other hand, by decreasing the multivalue and reducing the encoding rate when the state of the propagation path is poor, it is possible to decrease the amount of transmitted data and prevent the transmission-error rate from increasing.

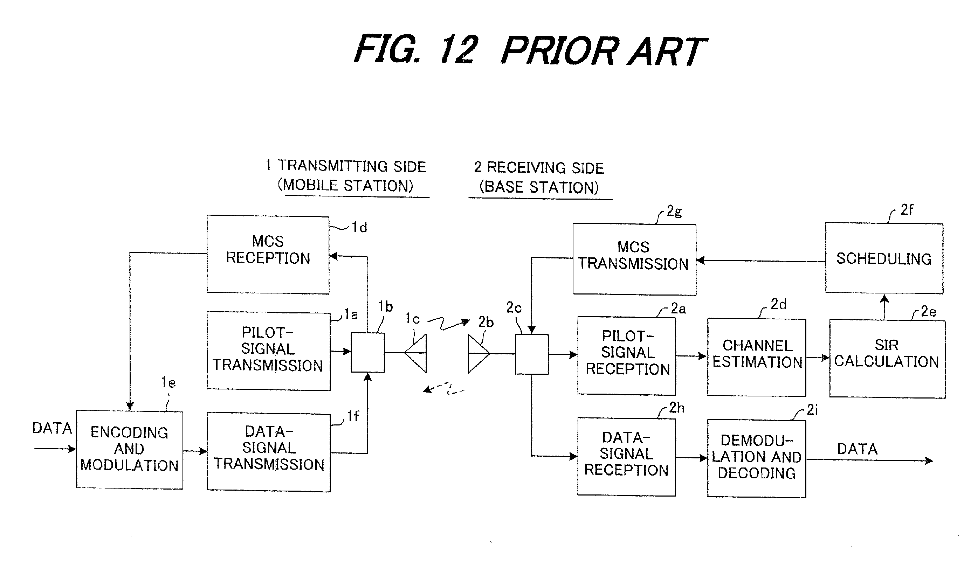

FIG. 12 is a drawing of a system for radio communication between a mobile station and a base station, where adaptive modulation and coding is performed for uplink communication from the mobile station to the base station, and radio units 1b, 2c comprise a transmitter and receiver.

The pilot-transmission unit 1a of the mobile station 1 generates a pi lot signal and performs specified transmission processing on that pilot signal, then the radio unit 1b converts the baseband pilot signal to a radio signal and transmits it from an antenna 1c to the base station 2.

The pilot-signal-receiving unit 2a of the base station 2 separates out the pilot signal from the received signal that is input by way of an antenna 2b and radio unit 2c, and inputs it to a channel-estimation unit 2d. The channel-estimation unit 2d uses that pilot signal to estimate the channel, and an SIR-calculation unit 2e uses that estimated channel to calculate the SIR (Signal to Interference Ratio). A scheduler 2f adaptively decides the MCS (Modulation and Coding Scheme: modulation method and encoding rate) based on the estimated SIR, then a MCS-transmission unit 2g performs specified transmission processing on that MCS, and the radio unit 2c converts that baseband MCS signal to a radio signal and transmits it from the antenna 2b to the mobile station 1.

The MCS-receiving unit 1d of the mobile station 1 demodulates the MCS that is transmitted from the base station, and inputs that MCS to an encoding/modulation unit 1e. The encoding/modulation unit 1 encodes the transmission data at the instructed encoding rate, and modulates the transmission data using the instructed multivalue modulation method (BPSK, QPSK, 16QAM, etc.), after which a data-signal-transmission unit 1f performs specified transmission processing on that transmission data, and the radio unit 1b converts the data signal to a radio signal and transmits it from the antenna 1c to the base station 2.

The data-signal-receiving unit 2h of the base station 2 separates out the data signal from the signal that was received by way of the antenna 2b and radio unit 2c, and inputs that data signal to a demodulation/decoding unit 2i. The demodulation/decoding unit 2i performs demodulation processing on the received data signal, after which it decodes the signal, then acquires and outputs the data.

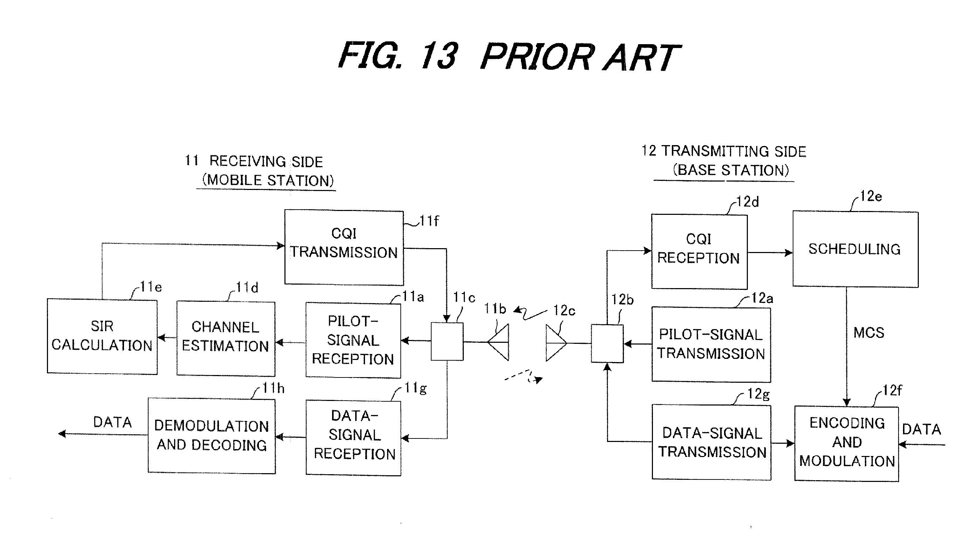

FIG. 13 is a drawing of a system for radio communication between a mobile station and a base station, where adaptive modulation and coding is performed for downlink communication from the base station to the mobile station, and radio units 11c, 12b comprise a transmitter and receiver.

A pilot-signal-transmission unit 12a of the base station 12 generates a pilot signal, and performs specified transmission processing on that pilot signal, then the radio unit 12b converts the baseband pilot signal to a radio signal and transmits it from an antenna 12c to the mobile station 11.

A pilot-signal-receiving unit 11a of the mobile station 11 separates out the pilot signal from the input signal that was received by way of an antenna 11b and radio unit 11c, and inputs that signal to a channel-estimation unit 11d. The channel-estimation unit 11d uses that pilot signal to estimate the channel, and a SIR-calculation unit 11e uses the estimated channel to calculate the SIR. A CQI-transmission unit 11f finds a GQI (Channel Quality Indicator) value that corresponds to that SIR, and performs transmission processing on that CQI value, then the radio unit 11c converts the baseband CQI-value signal to a radio signal, and transmits that signal from the antenna 11b to the base station 12.

A CQI-receiving unit 12d of the base station 12 demodulates the CQI value from the received signal and inputs it to a scheduler 12e. The scheduler 12e finds the MCS (modulation method and encoding rate) coreesponding one-to-one to the GQI value, and instructs an encoding/modulation unit 12f of that MCS. The encoding/modulation unit 12f encodes the transmission data using the instructed encoding rate, and modulates the transmission data using the instructed modulation method, then a data-signal-transmission unit 12g performs specified transmission processing on that transmission data, and the radio unit 12b converts the baseband data signal to a radio signal and transmits it from the antenna 12c to the mobile station 11.

A data-signal-receiving unit 11g of the mobile station 11 separates out the data signal from the input signal that was received by way of the antenna 11b and radio unit 11c, and inputs that signal to a demodulation/decoding unit 11 h. The demodulation/decoding unit 11 h performs demodulation processing on the received signal, and after that, performs decoding to acquire and output the data.

As described above, in a system that performs adaptive modulation and coding, in order to decide the MCS, it is necessary to estimate the SIR. Conventionally, when performing communication by a transmission method such as a OFDM transmission method or SC(Single Carrier)-FDMA transmission method, the average SIR of all of the sub carriers within the signal bandwidth is calculated using Equation (1) below, and the MCS (modulation method and encoding rate) is decided by comparing that average SIR with a threshold value.

$$SIR_i = \frac{\dfrac{1}{M}\sum_{i=0}^{M-1}\left\|\widetilde{\mathbf{h}}_{il}\right\|^2}{\sigma^2} \qquad (1)$$

In Equation (1), M is the number of sub carriers within the signal bandwidth, $\sigma^2$ is the average power of the noise, and $\widetilde{h}_{il}$ is the channel-estimation vector of the 1st sub carrier of the ith transmission antenna. Also, $\|\widetilde{h}_{il}\|^2$ is the norm of the vector $\widetilde{h}_{il}$ or in other words, the sum of squares of the absolute value of each component.

As can be clearly seen from Equation (1), the conventional SIR was estimated by taking only the noise component into consideration, and the interference component was not taken into consideration. The relationship between the optimum MCS and SIR depends on the multi-path environment, so in the case of the conventional SIR there was a problem in that a suitable MCS could not be decided, and thus throughput became poor depending on the condition.

## SUMMARY OF THE INVENTION

Taking the aforementioned problems into consideration, the object of the present invention is to provide a SIR estimation method for estimating SIR which is capable of selecting a suitable MCS regardless of the multi-path environment in SC-FDMA transmission, and provide a base station device and mobile station that use that SIR estimation method.

The aforementioned objective is accomplished by the present invention, by a SIR estimation method for a communication apparatus that performs communication by a single-carrier frequency division multiple access (SC-FDMA) transmission method, comprising: a step of specifying estimated channel values for each sub carrier within a signal bandwidth and weight coefficients used in frequency equalization; and a step of estimating SIR, which is a ratio of the signal power and interference power (including thermal noise power), of a specified transmitting antenna using said estimated channel values and weight coefficients.

In the aforementioned SIR estimation method, the SIR of the ith transmitting antenna is calculated by the equation

$$SIR_i = \left(\frac{1}{\dfrac{1}{M}\sum_{i=0}^{M-1}\mathbf{w}_{il}^H\widetilde{\mathbf{h}}_{il}} - 1\right)^{-1}$$

where in the equation

$$\widetilde{\mathbf{h}}_{il}$$

is the channel estimation vector (dimension is the number of receiving antennas) in the lth sub carrier of the ith transmitting antenna;

$$\mathbf{w}_{il}$$

is the MMSE weight vector (dimension is the number of receiving antennas) used in frequency equalization;

$$\mathbf{w}_{il}^{H}$$

is the conjugate transpose matrix of the MMSE weight vector; and

$$M$$

is the number of sub carriers in the signal bandwidth.

The SIR estimation method further comprises a step of deciding encoding rate and modulation method in the single-carrier frequency division multiple access (SC-FDMA) transmission method are set based on the estimated SIR. Also, according to the SIR estimation method, the SIR is measured and adaptive modulation/demodulation control is performed based on the SIR when transmission is performed by SC-FDMA from a plurality of transmitting antennas to a plurality of receiving antennas according to the MIMO transmission method.

Moreover, the aforementioned object is accomplished by the present invention, by a base station having an adaptive modulation and coding control function that decides encoding rate and modulation method of a mobile station that transmits data by a single-carrier frequency division multiple access (SC-FDMA) transmission method, and comprises: a SIR estimation unit that estimates SIR, which is a ratio of the signal power and interference power, of a specified transmitting antenna of a mobile station; a scheduler that decides encoding rate and modulation method for data that is transmitted from a specified transmitting antenna of the mobile station based on the estimated SIR; and a transmission unit that transmits the encoding rate and modulation method to the mobile station; wherein the SIR estimation unit estimates the SIR using estimated channel values for each sub carrier within a signal bandwidth and weight coefficients used in frequency equalization.

Furthermore, the aforementioned object is accomplished by the present invention, by a mobile station that receives signals that are transmitted from a base station by a single-carrier frequency division multiple access (SC-FDMA) transmission method, and transmits reception status to the base station, and comprises: a SIR estimation unit that estimates SIR, wwhich is a ratio of the signal power and interference power, of a specified transmitting antenna of the base station; a CQI deciding unit that decides a CQI value required for specifying encoding rate and modulation method for data that is transmitted to the mobile station from the specified transmitting antenna of the base station based on the estimated SIR; and a transmission unit that transmits the CQI value to the base station; wherein the SIR estimation unit estimates the SIR using estimated channel values for each sub carrier within a signal bandwidth and weight coefficients used in frequency equalization.

With the present invention, it is possible to estimate an SIR in the SC-FDMA transmission system by taking into consideration the interference component that cannot be suppressed by frequency equalization and it is possible to select an appropriate MCS (modulation method and encoding rate) by using this SIR without depending on the multipath environment, and thus it is possible to improve the throughput of the communication system.

Also, the SIR estimation method of the present invention can be applied to estimating SIR in the MIMO transmission system. In this case, the SIR estimation method of this invention is capable of taking into consideration the interference component that cannot be suppressed by frequency equalization and MIMO reception when estimating the SIR; and by performing adaptive modulation and coding using this SIR, it is possible to improve the throughput of the communication system.

Moreover, it is possible to perform scheduling (assigning opportunities for a user to perform transmission) using the SIR that is estimated by the SIR estimation method of the present invention.

Other features and advantages of the present invention will be apparent from the following description taken in conjunction with the accompanying drawings.

BRIEF DESCRIPTION OF THE DRAWINGS

FIG. 1 is a drawing for explaining a Localized FDM (Frequency Division Multiplexing) method, and Distributed FDM method.
FIG. 2 is a drawing for explaining SC-FDMA.
FIG. 3 is a drawing showing the structure of transmission in SC-FDMA.
FIG. 4 is a drawing for explaining the theory behind sub-carrier mapping.
FIG. 5 is a drawing showing the major components of a SC-FDMA receiving unit.
FIG. 6 is a drawing showing the construction of a base station of the present invention.
FIG. 7 is a drawing showing the construction of a mobile station of the present invention.
FIG. 8 is a drawing showing the construction of a frequency-assignment unit.
FIG. 9 is a drawing for explaining the SIR calculation method of the present invention.
FIG. 10 is a drawing showing a MIMO (Multiple Input Multiple Output) multiplexing transmission system that comprises an adaptive modulation and coding control function.
FIG. 11 is a drawing showing a multi-beam MIMO (Multiple Input Multiple Output) multiplexing transmission system that comprises an adaptive modulation and coding control function.
FIG. 12 is a drawing of a system for radio communication between a mobile station and a base station, where adaptive modulation and coding is performed for uplink communication from a mobile station to a base station.
FIG. 13 is a drawing of a system for radio communication between a mobile station and a base station, where adaptive modulation and coding is performed for downlink communication from a base station to a mobile station.

DESCRIPTION OF THE PREFERRED EMBODIMENTS

(A) SC-FDMA (Single Carrier-Frequency Division Multiplex Access)

The SIR estimation method of this invention can be used in the SC-FDMA method. First, the SC-FDMA method will be explained for the case in which there is one transmitting and receiving antenna. It should be noted that in paragraphs [0009] through [0011], the definitions of M and N are different from the definitions used in other sections.

(a) Single Carrier Transmission

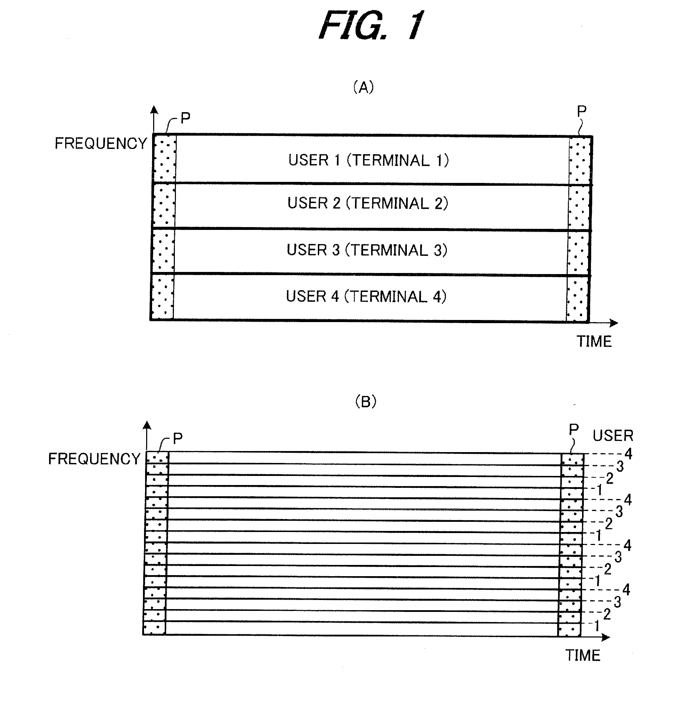

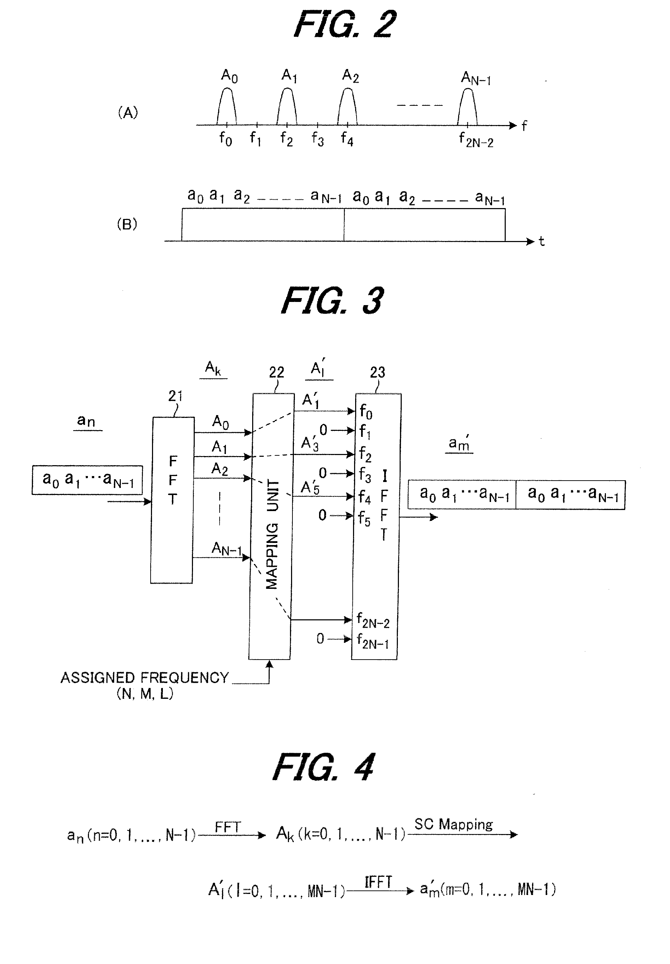

In addition to Time Division Multiplexing (TDM) as an up-link user multiplexing method in single carrier transmission, there is Localized FDM (Frequency Division Multiplexing) and Distributed FDM. As shown in (A) of FIG. 1, the Localized FDM method is a method of assigning consecutive sub carriers to each user. Also, as shown in (B) of FIG. 1, the Distributed FDM method is a method of assigning plural of sub carriers to a user within a fixed interval, and shifting the assigned sub carriers for each user.
When the Distributed FDM method and the Localized FDM method are observed from the time axis they appear to repeatedly transmit signals, and they can be regarded to be single-carrier transmission. For example, as shown in (A) of FIG. 2, mapping data $A_0$ to $A_{N-1}$ for every other sub carrier and transmitting them by the Distributed FDM method is the same as transmitting repeatedly data $a_0$ to $a_{N-1}$ two times on the time axis as shown in (B) of FIG. 2. Therefore, when transmitting N samples of transmission data $a_0$, $a_1$, ..., $a_{N-1}$ using the Distributed FDM method shown in (A) of FIG. 2, the transmission side performs single-carrier transmission as shown in FIG, 3. In FIG. 3, an N-sample FFT unit 21 performs FFT processing on the transmission data $a_0$, $a_1$, ..., $a_{N-1}$ to generate the sub-carrier component $A_0$, $A_1$, ..., $A_{N-1}$, and a mapping unit 22 maps $A_0$, $A_1$, ..., $A_{N-1}$ onto the respective sub-carriers $f_0$, $f_2$, ..., $f_{2N-2}$, and maps 0 onto sub-carriers $f_1$, $f_3$, ...$F_{2N-1}$, then inputs the results to the IFFT unit 23. The IFFT unit 23 performs IFFT processing on 2 x N number of sub-carriers, and inputs a data sequence of transmission data $a_0$ to $a_{N-1}$ that has been repeated two times on the time axis to a transmission unit (not shown in the figure), which transmits the data by a single carrier.
The theory behind the sub-carrier mapping described above can be represented as shown in FIG. 4. Typically, in Distributed FDM sub-carrier mapping, M is taken to be an arbitrary natural number (M = 2 in the example shown in FIG. 2), and L is adjusted to satisfy the relationship $0 \leqq L < M$(L=1 in the example in Fig.2), and can be represented by the following equation.

$$A_i' = \begin{cases} A_k & l = kM + L \qquad (k = 0,1,2,\ldots\ldots N-1) \\ 0 & otherwise \end{cases} \qquad (2)$$

FFT and IFFT can be expressed by the following equations:

$$\text{FFT}:\ A_k = \sum_{n=0}^{N-1} a_n e^{-2nk\pi/N} \qquad (3a)$$

$$\text{IFFT}:\ a_n = \sum_{k=0}^{N-1} A_k e^{j2\pi nk/N} \qquad (3b)$$

and by using the above equations, the following equation is obtained.

$$a_m' = \sum_{l=0}^{MN-1} A_l' e^{j2\pi nl/MN} = \sum_{k=0}^{N-1} A_{kM+L}' e^{j2\pi n(kM+L)/N}$$

$$= \sum_{k=0}^{N-1} A_{kM+L}' e^{j2\pi nk/N} e^{j2\pi nL/N} = e^{j2\pi nL/N} \sum_{k=0}^{N-1} A_k e^{j2\pi nk/N} \qquad (4)$$

Therefore,

$$a_m' = a_{iN+n}' = e^{j2\pi nL/N} \sum_{k=0}^{N-1} A_k e^{j2\pi nk/N} = e^{j2\pi nL/N} a_n \quad (n = 0,1,\ldots,N-1, i = 0,1,\ldots,M-1) \quad (5)$$

and as a result, it can be seen that $a_m'$ becomes a signal which is obtained by repeating a signal $a_n$ (n = 0, 1, ... N-1) M times and shifting the repeated signal by L x sub-carrier frequency, and it is regarded as a single carrier. The frequency assigned by the mapping unit 22 can be specified by N, M and L. Similarly, the Localized FDM method can also be regarded as a single carrier.

(b) Frequency Equalization Technique

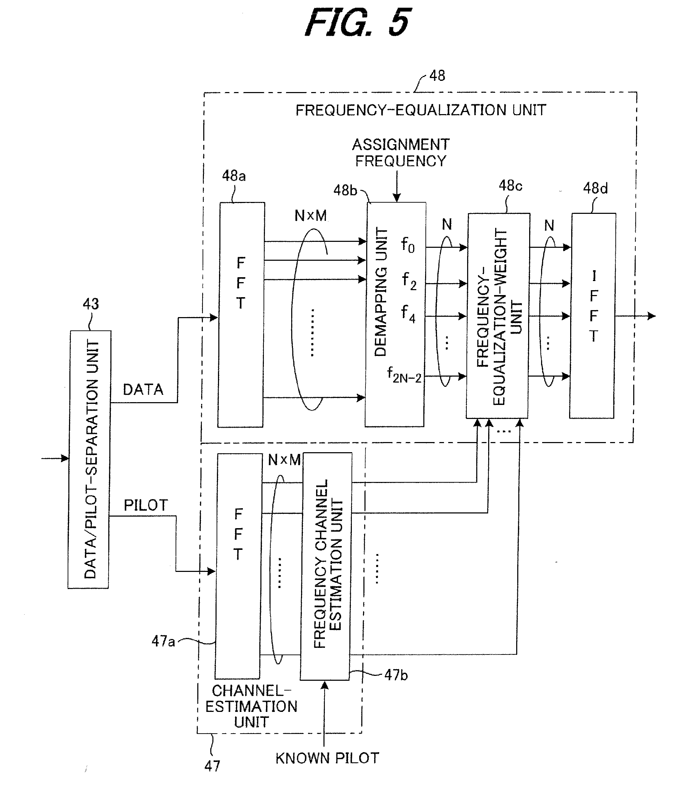

In single-carrier transmission, the receiving side performs the opposite processing from the transmitting side, and demodulates the transmission data. FIG. 5 shows the construction of the major components of the receiving unit, where a data/pilot-separation unit 43 separates the pilot and data from the received signal, and inputs them to a channel-estimation unit 47 and a frequency-equalization unit 48, respectively. In the channel-estimation unit 47, a FFT unit 47a performs FFT processing on the pilots for N x M number of samples and generates N x M number of frequency components, after which a frequency channel estimation unit 47b uses the N x M number of frequency components and N x M number of frequency components of known pilots to estimate a channel for each frequency, and inputs a channel-compensation signal to the frequency-equalizatian-weight unit (channel compensation unit) 48c of the frequency-equalization unit 48. The FFT unit 48a of the frequency-equalization unit 48 performs FFT processing on N x M number of sample data to generate N x M number of frequency components, and inputs the result to a de-mapping unit 48b. The de-mapping unit 48b selects N number of frequency components from the N x M number of frequency components based on the frequencies $f_0$, $f_2$,...$f_{2N-2}$ used by the transmitting side when transmitting data (assigned frequency) and inputs them to the frequency-equalization-weight unit 48c. The assigned frequency can be specified by M and L in Equation (2). The frequency-equalization-weight unit 48c uses the estimated channel value to calculate the weight of the MMSE (Minimum Mean Square Error), then multiplies the N number of frequency components output from the mapping unit 48b by that weight, and inputs the multiplication results to an I FFT process i ng unit t 48d. The I FFT process i ng unit 48d performs IFFT processing on the N number of frequency components, and outputs them as a time signal.

(B) Base Station

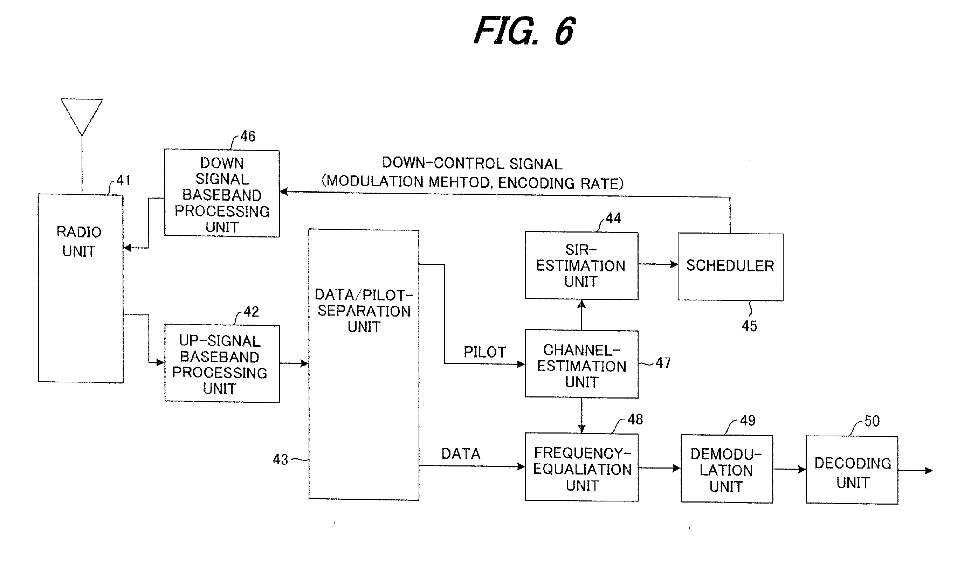

FIG. 6 is a drawing showing the construction of the base station of the present invention, and shows the case in which a pilot and data are both transmitted from a mobile station using the SC-FDMA method. The present invention can be applied to SIR estimation in the MIMO transmission method in which data is transmitted by SC-FDMA from a plurality of transmitting antennas on the transmitting side, and received by a plurality of receiving antennas on the receiving side, after which the data is demodulated, however, in order to simplify the explanation, the figure shows the case of using only one transmitting/receiving antenna.

A radio unit 41 comprises a receiver, and this receiver converts the frequency of a signal received from a mobile station user from a radio frequency to a baseband frequency, and inputs the signal to an UP-signal baseband processing unit 42. The UP-signal baseband processing unit 42 demodulates time division multiplex data from the input signal, after which a data/pilot-separation unit 43 separates the pilot and data from that time-division-multiplex data. A channel-estimation unit 47 performs channel estimation as shown in FIG. 5, and inputs estimated channel values for M number of sub carriers that correspond to each of Ntx $\times$ Nrx links to a SIR-estimation unit 44 and frequency-equalization unit 48. The SIR-estimation unit 44 calculates the SIR according to the following equation.

$$SIR_i = \left( \cfrac{1}{\cfrac{1}{M} \sum_{l=0}^{M-1} \mathbf{w}_{il}^H \widetilde{\mathbf{h}}_{il}} - 1 \right)^{-1} \qquad (6)$$

Here, $\widetilde{h}_{il}$ is the channel-estimation vector for the Ith sub carrier of the ith transmitting antenna (dimension is the number of receiving antennas), and $\mathbf{w}_{il}^{H}$ is the MMSE weight vector for i th transmitting antenna and th sub carrier number (dimension is the number of receiving antennas), and can be expressed by the following equation.

$$\mathbf{w}_{ij}^{H} = \mathbf{h}_{ij}^{H} \left( \widetilde{\mathbf{H}}_{l}' \; \widetilde{\mathbf{H}}_{l}'^{H} + \frac{M}{N} \sigma^2 \mathbf{I} \right)^{-1} \qquad (7)$$

The coefficient M/N indicates the effect of noise suppression by sub-carrier mapping/de-mapping. The method of deriving Equation (6) will be described later.

A scheduler 45 adaptively decides the data-modulation method and encoding rate based on the estimated SIR, and inputs the result to a DOWN-signal baseband process i ng unit 46. The scheduler 45 can use the SIR to perform scheduling (assign a transmission opportunity for the user), however that will be omitted in this explanation.

The DOWN-signal baseband processing unit 46, for example, performs OFDM transmission processing, and transmits data to the mobile station by way of the radio unit 41. In this way, it becomes possible for the mobile station to transmit time division multiplex data comprising a pilot and data according to an instruction from the base station. When a signal is received from a mobile station, the UP-signal baseband processing unit 42 demodulates the time division multiplex data, and a data/pilot-separation unit 43 separates the pi lot and data from the time-division multiplex data and inputs them to the channel-estimation unit 47 and frequency-equalization unit 48, respectively. The frequency-equalization unit 48 performs the processing explained in FIG. 5 and outputs a data signal in time domain. A demodulation unit 49 then demodulates the encoded data, and a decoding unit 50 decodes and outputs the data.

(C) Mobile Station

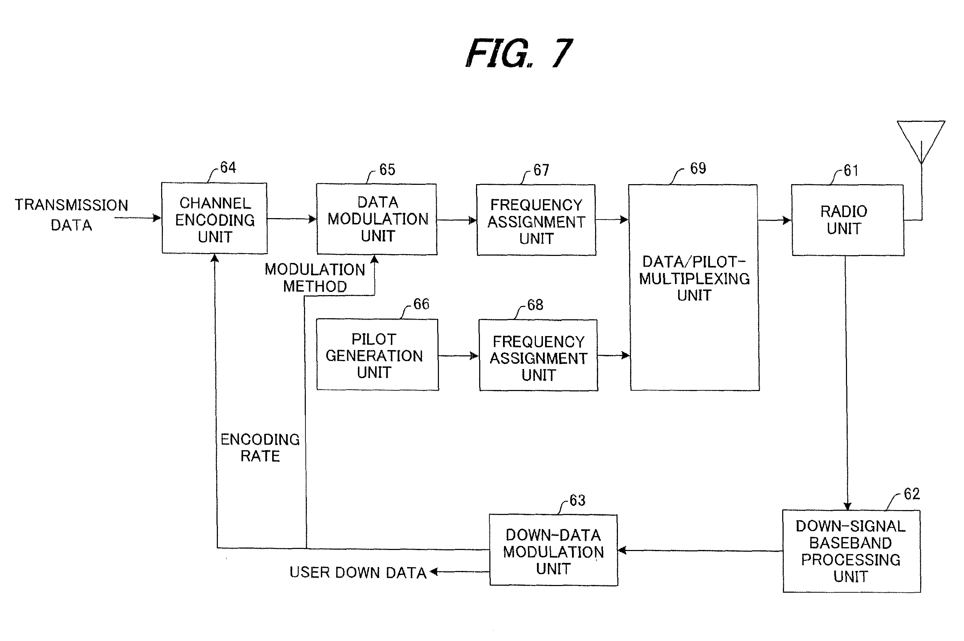

FIG. 7 shows the construction of the mobile station of the present invention. It should be noted that the definitions of M and N used in this paragraph and in paragraph [0015] are different that those used in other sections.

A radio unit 61 comprises a receiver, and this receiver converts the frequency of a received signal from a radio frequency to a baseband frequency, then inputs the signal to a DOWN-signal baseband processing unit 62. The DOWN-signal baseband processing unit 62 performs receiving processing on the input signal and inputs the result to a data demodulation unit 63, and that data demodulation unit 63 demodulates the received data. A channel encoding unit 64 encodes the signal according to the encoding rate that is specified by the base station, a data-modulation unit 65 performs data modulation according to the modulation method specified by the base station, and a pilot generation unit 66 generates a pilot.

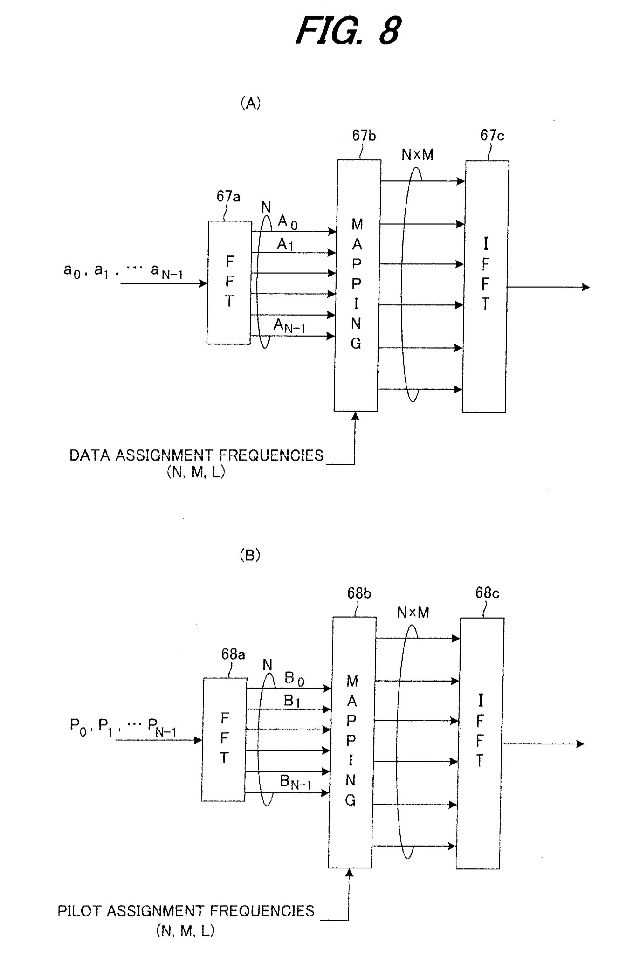

A frequency assignment unit 67 has the construction shown in (A) of FIG. 8, and makes it possible to transmit FDM data using single-carrier transmission. A FFT unit 67a performs FFT processing on N number of samples of transmission data $a_0$, $a_1$, ..., $a_{N-1}$, and generates frequency components $A_0$, $A_1$,..., $A_{N-1}$, after which a mapping unit 67b maps $A_0$, $A_1$,... $A_{N-1}$ on N number of data-transmission frequencies based on frequency-assignment data (N, M, L), and maps 0 on the remaining frequencies, then inputs the result to an IFFT unit 67c. The IFFT uni t 67c performs IFFT processing on M x N number of frequency components, and repeats the transmission data $a_0$ to $a_{N-1}$ M times on the time axis and outputs that data sequence.

A frequency-assignment unit 68 has construction as shown in (B) of FIG. 8, and makes it possible to transmit FDM data using single-carrier transmission. A FFT unit 68a performs FFT processing on N number of samples of transmission data $p_0$, $p_1$, ..., $p_{N-1}$, and generates frequency components $B_0$, $B_1$,..., $B_{N-1}$, after which a mapping unit 68b maps $B_0$, $B_1$,..., $B_{N-1}$ on N number of pilot-transmission frequencies based on frequency-assignment data (N, M, L), and maps 0 on the remaining frequencies, then inputs the result to an IFFT uni 68c. The IFFT uni 68c performs IFFT processing on M x N number of frequency components, and repeats the transmission data $p_0$ to $p_{N-1}$ M times on the time axis and outputs that data sequence.

A data/pilot-multiplex unit 69 performs time division multiplexing of the data and pilot that are output from the frequency assignment units 67, 68, and inputs the result to the radio unit 61. The transmitter of the radio unit 61 converts the frequency of the baseband signal to a radio frequency, after which it amplifies the signal and transmi ts it to the base station.

(D) SIR Calculation Method

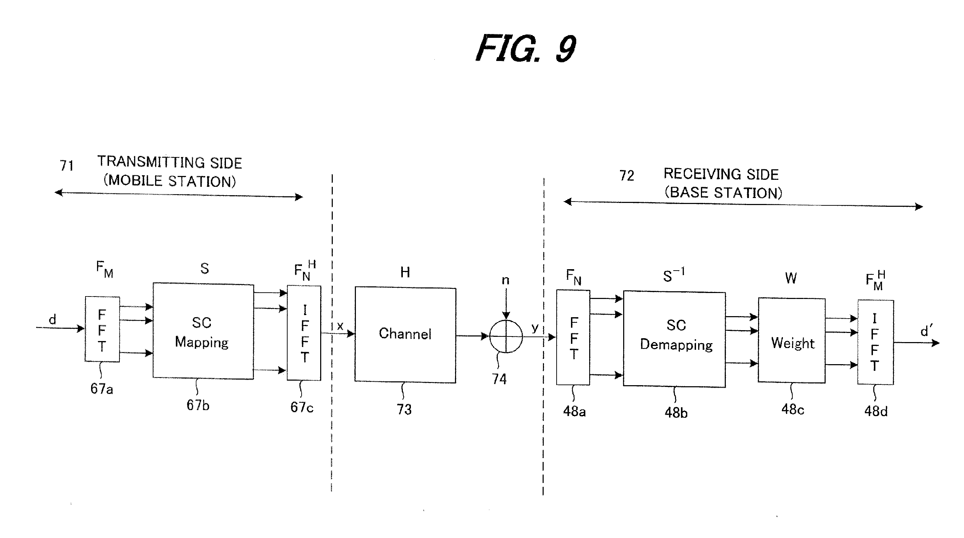

FIG. 9 is a drawing that explains the SIR calculation method of the present invention, and it comprises construction in which the data-transmitting side 71 and data-receiving side 72 are connected by way of a channel (propagation path) 73 and noise-superposition unit 74. Also, in FIG. 9, the mobile station is taken to be the data-transmitting side, and the base station is taken to be the data-receiving side, and here the same reference numbers are used for parts that are identical to those shown in FIG. 5 and FIG. 8. Also, it is not clear in FIG. 9, however, SIR estimation for a MIMO transmission method is presumed in which data is transmitted using SC-FDMA from a plurality of transmitting antennas on the transmitting side, and the data is received by a plurality of receiving antennas on the receiving side, after which the data is demodulated.

In this invention, the SIR is estimated using Equation (6). The basic idea is to estimate the SIR by accurately taking into consideration the interference component that cannot be completely suppressed by frequency equalization or MIMO reception. The conventional method (Equation (1)) only takes into consideration the noise component and did not take into consideration the interference component, so throughput became poor when performing adaptive modulation and demodulation.

First, the symbols used will be defined below.

**d** :     Transmission data vector (M × 1)

n :     Noise vector (N × 1), average power of each component $\sigma^2$

x :     Transmission signal vector (M × 1)

y :     Reception signal vector (N × 1)

**d'** :     Demodulation data vector (M × 1)

S :     Sub-carrier mapping matrix (N × M), elements are 0 or 1.

H :     Propagation path matrix (N × N circulant matrix).

$\mathbf{F}_M, \mathbf{F}_M^H$ :     M-dimension Fourier Transform matrix and its Inverse Transform matrix (M × M)

$\mathbf{F}_N, \mathbf{F}_N^H$ :     N-dimension Fourier Transform matrix and its Inverse Transform matrix (N × N)

W :     Frequency equalization weight matrix (M x M diagonal matrix) When there is a plurality of transmitting/receiving antennas, the following relationships occur.

$$\mathbf{x}_i = \mathbf{F}_N^H \mathbf{S} \mathbf{F}_M \mathbf{d}_i \qquad (8a)$$

$$\mathbf{y}_j = \sum_i \mathbf{H}_{ij}\mathbf{x}_i + \mathbf{n}_j \qquad (8b)$$

$$\mathbf{d}_i' = \sum_j \mathbf{F}_M^H \mathbf{W}_{ij}\mathbf{S}^{-1}\mathbf{F}_N \mathbf{y}_j \qquad (8c)$$

In Equations (8a), (8b) and (8c), i (=1, 2, ..., Ntx) is the transmitting antenna index, and j(=1, 2, ..., Ntx) is the receiving antenna index.

By substituting Equations (8a) and (8b) into Equation (8c), the following equation is obtained.

$$
\begin{aligned}
\mathbf{d}_i' &= \sum_j \left\{ \mathbf{F}_M^H \mathbf{W}_{ij}\mathbf{S}^{-1}\mathbf{F}_N \left( \sum_k \mathbf{H}_{kj}\mathbf{F}_N^H \mathbf{S}\mathbf{F}_M \mathbf{d}_k + \mathbf{n}_j \right) \right\} \\
&= \sum_j \left( \mathbf{F}_M^H \mathbf{W}_{ij}\mathbf{S}^{-1}\mathbf{F}_N \sum_k \mathbf{H}_{kj}\mathbf{F}_N^H \mathbf{S}\mathbf{F}_M \mathbf{d}_k \right) + \sum_j \mathbf{F}_M^H \mathbf{W}_{ij}\mathbf{S}^{-1}\mathbf{F}_N \mathbf{n}_j \qquad (9) \\
&= \sum_k \mathbf{F}_M^H \left( \sum_j \mathbf{W}_{ij}\tilde{\mathbf{H}}_{Mkj} \right) \mathbf{F}_M \mathbf{d}_k + \sum_j \mathbf{F}_M^H \mathbf{W}_{ij}\tilde{\mathbf{n}}_{Mj}
\end{aligned}
$$

In Equation(9), the following is presumed.

$$\tilde{\mathbf{H}}_{Mkj} = \mathbf{S}^{-1}\mathbf{F}_N \mathbf{H}_{kj}\mathbf{F}_N^H \mathbf{S} \qquad (10)$$

$$\tilde{\mathbf{n}}_{Mj} = \mathbf{W}_{ij}\mathbf{S}^{-1}\mathbf{F}_N \mathbf{n}_j$$

Since $H_{kj}$ is a circulant matrix,

$$\tilde{\mathbf{H}}_{Mkj}$$

becomes a diagonal matrix. Also, since

$$\mathbf{W}_{ij}$$

is also a diagonal matrix,

$$\sum_j \mathbf{W}_{ij}\tilde{\mathbf{H}}_{Mkj}$$

also becomes a diagonal matrix. Therefore, the inside of the summation Σ of the first term on the right side of Equation (9) can be expressed as below.

$$\mathbf{F}_M^H \left( \sum_j \mathbf{W}_{ij} \tilde{\mathbf{H}}_{Mkj} \right) \mathbf{F}_M \mathbf{d}_k = \mathbf{p}_{ik} * \mathbf{d}_k \qquad (11)$$

Here, * indicates convolution calculation between vectors. Also, the following equation is established.

$$\mathbf{p}_{ik} = \mathbf{F}_M^H \sum_j v\left( \mathbf{W}_{ij} \tilde{\mathbf{H}}_{Mkj} \right) = \left[ p_{ik0}, p_{ik1}, \ldots, p_{ikM-1} \right]^T \qquad (12)$$

Here, $v(X)$ indicates making the diagonal component of the matrix X into a vector. In other words, this can be expressed by the following.

$$v\left( \mathbf{W}_{ij} \tilde{\mathbf{H}}_{Mkj} \right) = \left[ w_{ij0}^* \tilde{h}_{kj0}, w_{ij1}^* \tilde{h}_{kj1}, \ldots, w_{ij(M-1)}^* \tilde{h}_{kjM-1} \right]^T \qquad (13)$$

Also, the following is presumed.

$$\mathbf{w}_{il} = \left[ w_{i0l}, w_{i1l}, \ldots, w_{i(Nrx-1)l} \right]$$
$$\mathbf{h}_{il} = \left[ h_{i0i}, h_{i1l}, \ldots, h_{i(Nrx-1)l} \right] \qquad (14)$$

In Equation (12), the first component $p_{ii0}$ is the signal component when k = i, and the remaining is the interference component. Therefore, the signal component S, interference component I and noise component Z can be found as shown below.

$$S_i = \left| p_{ii0} \right|^2 = \frac{1}{M^2} \left| \sum_{l=0}^{M-1} \mathbf{w}_{il}^H \tilde{\mathbf{h}}_{il} \right|^2$$

$$I_i = \frac{1}{M} \sum_{l=0}^{M-1} \sum_{k=1}^{Ntx} \left| \mathbf{w}_{il}^H \tilde{\mathbf{h}}_{kl} \right|^2 - S_i = \frac{1}{M} \sum_{l=0}^{M-1} \mathbf{w}_{il}^T \tilde{\mathbf{H}}_l' \tilde{\mathbf{H}}_l'^H \mathbf{w}_{il} - S_i \qquad (15)$$

$$Z_i = \frac{1}{N} \sigma^2 \sum_{l=0}^{M-1} \mathbf{w}_{il}^H \mathbf{w}_{il}$$

Also, the MMSE weight is expressed by the following equation,

$$\mathbf{w}_{il}^T = \mathbf{h}_{il}^H \left( \tilde{\mathbf{H}}_l' \tilde{\mathbf{H}}_l'^H + \frac{M}{N} \sigma^2 \mathbf{I} \right)^{-1} \qquad (16)$$

so deriving $SIR_i$ using this equation, results in the following.

$$SIR_i = \frac{\dfrac{1}{M^2}\left|\displaystyle\sum_{l=0}^{M-1}\mathbf{w}_{il}^H\widetilde{\mathbf{h}}_{il}\right|^2}{\dfrac{1}{M}\displaystyle\sum_{l=0}^{M-1}\mathbf{w}_{il}^H\widetilde{\mathbf{H}}_i'\widetilde{\mathbf{H}}_i'^H\mathbf{w}_{il}+\dfrac{1}{N}\sigma^2\displaystyle\sum_{l=0}^{M-1}\mathbf{w}_{il}^H\mathbf{w}_{il}-\dfrac{1}{M^2}\left|\displaystyle\sum_{l=0}^{M-1}\mathbf{w}_{il}^H\widetilde{\mathbf{h}}_{il}\right|^2}$$

$$=\frac{\dfrac{1}{M^2}\left|\displaystyle\sum_{l=0}^{M-1}\mathbf{w}_{il}^H\widetilde{\mathbf{h}}_{il}\right|^2}{\dfrac{1}{M}\displaystyle\sum_{l=0}^{M-1}\mathbf{w}_{il}^H\left(\widetilde{\mathbf{H}}_i'\widetilde{\mathbf{H}}_i'^H+\dfrac{M}{N}\sigma^2\mathbf{I}\right)\mathbf{w}_{il}-\dfrac{1}{M^2}\left|\displaystyle\sum_{l=0}^{M-1}\mathbf{w}_{il}^H\widetilde{\mathbf{h}}_{il}\right|^2} \qquad (17)$$

$$=\frac{\dfrac{1}{M^2}\left|\displaystyle\sum_{l=0}^{M-1}\mathbf{w}_{il}^H\widetilde{\mathbf{h}}_{il}\right|^2}{\dfrac{1}{M}\displaystyle\sum_{l=0}^{M-1}\mathbf{w}_{il}^H\widetilde{\mathbf{h}}_{il}-\dfrac{1}{M^2}\left|\displaystyle\sum_{l=0}^{M-1}\mathbf{w}_{il}^H\widetilde{\mathbf{h}}_{il}\right|^2}=\left(\dfrac{1}{\dfrac{1}{M}\displaystyle\sum_{l=0}^{M-1}\mathbf{w}_{il}^H\widetilde{\mathbf{h}}_{il}}-1\right)^{-1}$$

The equation above can be applied to the case of estimating SIR in the MIMO transmission method in which data is sent using SC-FDMA from a plurality of transmitting antennas on the transmitting side, and that data is then received by a plurality of receiving antennas on the receiving side, after which the data is demodulated, however, the above equation can also be applied in cases other than MIMO transmission.

(E) Application to a MIMO Transmission System

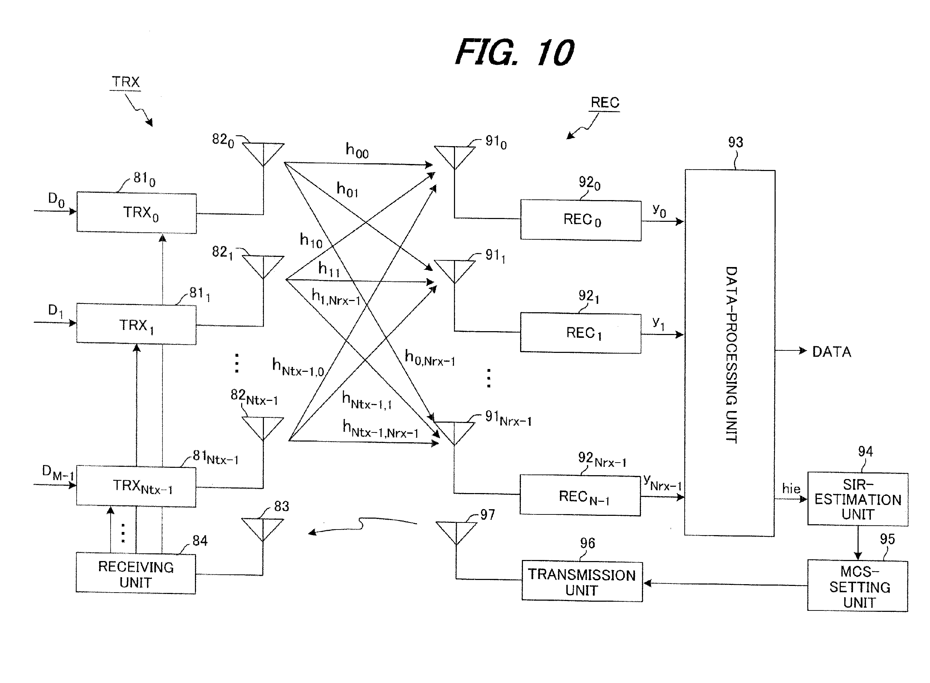

FIG. 10 is a drawing showing the case in which Equation (17) is used for estimating the SIR in adaptive modulation and coding control of a MIMO (Multiple Input Multiple Output) multiplex transmission system, where TRX is the transmitting apparatus and REC is the receiving apparatus.
The same number of data streams $D_0$ to $D_{Ntx-1}$ as the number $N_{tx}$ of transmitting antennas go through processing such as data encoding, data modulation, SC-FDMA processing and frequency-UP conversion by transmitting apparatuses $81_0$ to $81_{Ntx-1}$, respectively, and then are transmitted by transmitting antennas $82_0$ to $82_{Ntx-1}$.
The signals that are transmitted from the antennas $82_0$ to $82_{Ntx-1}$ pass through each of the transmitting/receiving antennas and fading channels $h_{ijl}$ (i = 0 to Ntx-1, j = 0 to Nrx-1, l = 0 to M-1) for each sub carrier are received by $N_{rx}$ number of receiving antennas $91_0$ to $91_{Nrx-1}$. The signals that are received by the receiving antennas pass through processing such as high-frequency amplification and frequency-DOWN conversion by receiving apparatuses $92_0$, to $92_{Nrx-1}$, so that received data streams $y_0$ to $y_{Nrx-1}$ are generated. Each of the received data streams is multiplexed by $N_{tx}$ number of transmission data streams, so a data-processing unit 93 performs data-separation processing according to a specified algorithm (for example, a MLD algorithm or MMSE algorithm) and separates out and reproduces the transmission data streams $D_0$ to $D_{Ntx-1}$. In other words, the data-processing unit 93 receives pilot signals that are transmitted from the transmitting antennas $82_0$ to $82_{Ntx-1}$ and estimates channels $h_{ijl}$ (i = 0 to Ntx-1, j = 0 to Nrx - 1, l = 0 to M-1), after which it outputs input data D according to a specified algorithm.
An SIR-estimation unit 94 uses Equation (6) to estimate the SIR, which is the ratio of the signals and interference signals from each transmitting antenna. In Equation (6)

$$\widetilde{\mathbf{h}}_{il}=\left[h_{i0l},h_{i1l},\ldots,h_{i(Nrx-1)l}\right]^T \qquad (18)$$

is the channel-estimation vector (dimension is the number of receiving antennas) in the lth sub carrier from the ith transmitting antenna (i = 0 to Ntx-1), and
$\mathbf{w}_{il}$
is the MMSE weight vector (dimension is the number of receiving antennas) in the lth sub carrier from the ith transmitting antenna (i = 0 to Ntx-1).
A MCS-setting unit 95 sets the MCS for each of the transmitting antennas based on the estimated SIR for each of the transmitting antennas, and a transmitting unit 96 transmits the results to the transmitting side. A receiving unit 84 on the transmitting side inputs the received MCS for each antenna to the respective transmission apparatus $81_0$ to $81_{Ntx-1}$, and each transmission apparatus performs modulation with the instructed encoding rate and modulation method, and transmits the data.

(F) Application to a Multi-Beam MIMO Transmission System

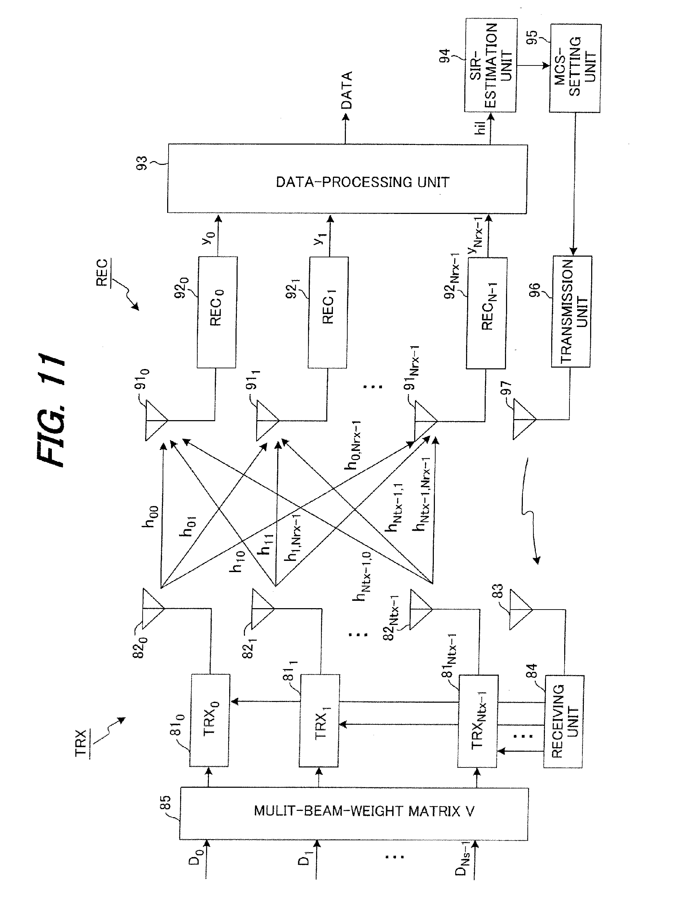

FIG. 11 is a drawing showing the case in which Equation (17) is used to estimate the SIR in adaptive modulation and coding control of a multi-beam MIMO (Multiple Input Multiple Output) multiplex transmission system, where TRX is the transmitting apparatus and REC is the receiving apparatus.

A multi-beam-weight unit 85 multiplies Ns number of multi-beam-weight data streams $D_0$ to $D_{Ns-1}$ by a multi-beam-weight matrix V (Ntx rows x Ns columns), and converts the same number of streams as the number of transmitting antennas Ntx. Each of the transmission apparatuses $81_0$ to $81_{Ntx-1}$ perform processing such as data encoding, data modulation, SC-FDMA processing and frequency-UP conversion, and transmits the signals from each of the transmitting antennas $82_0$ to $82_{Ntx-1}$.

The signals that are transmitted from the antennas $82_0$ to $82_{Ntx-1}$, pass between each of the transmitting/receiving antennas and fading channels $h_{ijl}$ (i=0~Ntx-1, j = 0~Nrx-1, l=0~M-1 for each sub carrier, and after being multiplexed in space, they are received by $N_{rx}$ number of receiving antennas $91_0$ to $91_{Nrx-1}$. The signals that are received by the receiving antennas pass through processing such as high-frequency amplification and frequency-DOWN conversion by receiving apparatuses $92_0$ to $92_{Nrx-1}$, and received data streams $y_0$, to $y_{Nrx-1}$ are generated. Each of the received data streams multiplexed by $N_{tx}$ number of data streams, so a data-processing unit 93 performs data-separation processing according to a specified algorithm (for example, an MLD algorithm or MMSE algorithm) and separates out and reproduces the transmission data streams $D_0$ to $D_{Ns-1}$. In other words, the data-processing unit 93 receives pilots signals that are transmitted from the transmitting antennas $82_0$ to $82_{Ntx-1}$ and estimates channels $h_{ijl}$ (i=0 ~Ntx-1, j = 0~Nrx-1, l=0~M-1), after which it outputs input data D according to a specified algorithm.

A SIR-estimation unit 94 uses Equation (6) to estimate the SIR, which is the ratio of the signals and interference signals from the transmitting antennas. In Equation (6)

$$\tilde{\mathbf{h}}_{il}$$

is defined by the following.

$$\tilde{\mathbf{h}}_{il} = \left[ h'_{i0l}, h'_{i1l}, \ldots, h'_{i(Nrx-1)l} \right]^{T} \qquad (19)$$

This is the channel-estimation vector (dimension is the number of receiving antennas) in the lth sub carrier from the ith transmission stream (i = 0 to Ns-1), and

$$h'_{i0l}$$

is the matrix component in a case where the channel matrix H is replaced with HV. Also, in Equation (6)

$$\mathbf{w}_{il}$$

is the MMSE weight vector (dimension is the number of receiving antennas) in the lth sub carrier from the ith transmission stream (i = 0 to Ns-1).

A MCS-setting unit t 95 sets the MCS for each transmitting antenna based on the estimated SIR for each transmitting antenna, and the transmitting unit 96 transmits each MCS to the transmitting side. The receiving unit 84 on the transmitting side inputs the received MCS for each antenna to each of the respective transmission apparatuses $81_0$ to $81_{Nx-1}$, and each transmission apparatus performs modulation using the instructed encoding rate and modulation method, and transmits the data.

(G) Example of a Variation

In the case in which the mobile station shown in FIG. 12 transmits data by a SC-FDMA transmission method, the SIR-estimation unit 2e of the base station can use the SIR-measurement method described above when calculating the SIR, or in other words, the SIR can be calculated according to Equation (17).
In the case in which the base station shown in FIG. 13 transmits data by a SC-FDMA transmission method, the SIR-calculation unit 11e of the mobile station can use the S I R-measurement method described above when calculating the SIR, or in other words, the SIR can be calculated according to Equation 17.
As many apparently widely different embodiments of the present invention can be made without departing from the spirit and scope thereof, it is to be understood that the invention is not limited to the specific embodiments thereof except as defined in the appended claims.

**Claims**

1. A SIR estimation method for a communication apparatus that performs communication by a single-carrier frequency division multiple access (SC-FDMA) transmission method comprising steps of:

   specifying estimated channel values for each sub carrier within a signal bandwidth and weight coefficients used in frequency equalization; and
   estimating SIR, which is a ratio of the signal power and interference power, of a specified transmitting antenna using said estimated channel values and weight coefficients.

2. The SIR estimation method of claim 1, wherein the SIR of the ith transmitting antenna is calculated by the equation

$$SIR_i = \left( \frac{1}{\frac{1}{M}\sum_{l=0}^{M-1} \mathbf{w}_{il}^H \tilde{\mathbf{h}}_{il}} - 1 \right)^{-1}$$

   where in the equation

$$\tilde{\mathbf{h}}_{il}$$

   is the channel estimation vector (dimension is the number of receiving antennas) in the lth sub carrier of the ith transmitting antenna;

$$\mathbf{w}_{il}$$

   is the MMSE weight vector (dimension is the number of receiving antennas) used in frequency equalization;

$$\mathbf{w}_{il}^H$$

   is the conjugate transpose matrix of the MMSE weight vector; and

$$M$$

   is the number of sub carriers in the signal bandwidth.

3. The SIR estimation method of claim 1 or claim 2 further comprising step of:

   deciding encoding rate and modulation method in the single-carrier frequency division multiple access (SC-FDMA) transmission method based on said SIR.

4. The SIR estimation method of claim 1 or claim 2 wherein said SIR is measured and adaptive modulation/demodulation control is performed based on the SIR when transmission is performed by SC-FDMA from a plurality of transmitting antennas to a plurality of receiving antennas according to the MIMO transmission method.

5. The SIR estimation method of claim 1 or claim 2 wherein said SIR is measured and adaptive modulation/demodulation control is performed based on the SIR when transmission is performed by SC-FDMA using a plurality of transmitting beams to a plurality of receiving antennas according to the MIMO transmission method.

6. A base station having an adaptive modulation and coding control function that decides encoding rate and modulation method of a mobile station that transmits data by a single-carrier frequency division multiple access (SC-FDMA) transmission method, comprising:

   a SIR estimation unit that estimates SIR, which is a ratio of the signal power and interference power, of a specified transmitting antenna of a mobile station;
   a scheduler that decides encoding rate and modulation method for data that is transmitted from the specified transmitting antenna of the mobile station based on the estimated SIR; and
   a transmission unit that transmits the encoding rate and modulation method to the mobile station; wherein
   said SIR estimation unit estimates the SIR using estimated channel values for each sub carrier within a signal bandwidth and weight coefficients used for equalization.

7. A mobile station that receives signals that are transmitted from a base station by a single-carrier frequency division multiple access (SC-FDMA) transmission method, and transmits reception status to the base station, comprising:

   a SIR estimation unit that estimates SIR, which is a ratio of the signal power and interference power, of a specified transmitting antenna of the base station;
   a CQI deciding unit that decides a CQI value required for specifying encoding rate and modulation method for data that is transmitted to the mobile station from the specified transmitting antenna of said base station based on the estimated SIR; and
   a transmission unit that transmits the CQI value to the base station; wherein
   said SIR estimation unit estimates the SIR using estimated channel values for each sub carrier within a signal bandwidth and weight coefficients used for equalization.

# FIG. 1

(A)

FREQUENCY

P

USER 1 (TERMINAL 1)

USER 2 (TERMINAL 2)

USER 3 (TERMINAL 3)

USER 4 (TERMINAL 4)

P

TIME

(B)

FREQUENCY

P

P    USER

TIME

EP 1 892 860 A2

# FIG. 2

(A)

$A_0$  $A_1$  $A_2$  $A_{N-1}$

- - - -

$f_0$  $f_1$  $f_2$  $f_3$  $f_4$  $f_{2N-2}$  $f$

(B)

$a_0\ a_1\ a_2\ -\ -\ -\ a_{N-1}\ a_0\ a_1\ a_2\ -\ -\ -\ a_{N-1}$

$t$

# FIG. 3

$a_n$

$a_0\ a_1\ \cdots a_{N-1}$

21

F F T

$A_k$

$A_0$
$A_1$
$A_2$
$\vdots$
$A_{N-1}$

22

MAPPING UNIT

$A'_l$

$A'_1$
$A'_3$
$A'_5$

23

$A'_1 \rightarrow f_0$
$0 \rightarrow f_1$
$\rightarrow f_2$
$0 \rightarrow f_3$
$\rightarrow f_4$
$0 \rightarrow f_5$

$\rightarrow f_{2N-2}$
$0 \rightarrow f_{2N-1}$

I F F T

$a'_m$

$a_0\ a_1\ \cdots a_{N-1}$   $a_0\ a_1\ \cdots a_{N-1}$

ASSIGNED FREQUENCY
(N, M, L)

# FIG. 4

$a_n\,(n=0,\,1,\,\ldots,\,N-1) \xrightarrow{\text{FFT}} A_k\,(k=0,\,1,\,\ldots,\,N-1) \xrightarrow{\text{SC Mapping}}$

$A'_l\,(l=0,\,1,\,\ldots,\,MN-1) \xrightarrow{\text{IFFT}} a'_m\,(m=0,\,1,\,\ldots,\,MN-1)$

# FIG. 5

# FIG. 6

DOWN-CONTROL SIGNAL
(MODULATION MEHTOD, ENCODING RATE)

RADIO UNIT — 41

DOWN SIGNAL BASEBAND PROCESSING UNIT — 46

UP-SIGNAL BASEBAND PROCESSING UNIT — 42

DATA/PILOT-SEPARATION UNIT — 43

SIR-ESTIMATION UNIT — 44

SCHEDULER — 45

CHANNEL-ESTIMATION UNIT — 47

PILOT

DATA

FREQUENCY-EQUALIATION UNIT — 48

DEMODU-LATION UNIT — 49

DECODING UNIT — 50

EP 1 892 860 A2

FIG. 7

TRANSMISSION DATA →

64 CHANNEL ENCODING UNIT

65 DATA MODULATION UNIT

67 FREQUENCY ASSIGNMENT UNIT

69 DATA/PILOT-MULTIPLEXING UNIT

61 RADIO UNIT

66 PILOT GENERATION UNIT

68 FREQUENCY ASSIGNMENT UNIT

MODULATION METHOD

ENCODING RATE

63 DOWN-DATA MODULATION UNIT

USER DOWN DATA ←

62 DOWN-SIGNAL BASEBAND PROCESSING UNIT

EP 1 892 860 A2

# FIG. 8

(A)

DATA ASSIGNMENT FREQUENCIES
(N, M, L)

(B)

PILOT ASSIGNMENT FREQUENCIES
(N, M, L)

# FIG. 9

EP 1 892 860 A2

**71** TRANSMITTING SIDE (MOBILE STATION)

**72** RECEIVING SIDE (BASE STATION)

$F_M$    $S$    $F_N^H$    $H$    $n$    $F_N$    $S^{-1}$    $W$    $F_M^H$

$d$ → | F F T | → | SC Mapping | → | I F F T | $x$ → | Channel | → ⊕ $y$ → | F F T | → | SC Demapping | → | Weight | → | I F F T | → $d'$

67a    67b    67c    73    74    48a    48b    48c    48d

FIG. 10

EP 1 892 860 A2

FIG. 11

# FIG. 12 PRIOR ART

1 TRANSMITTING SIDE
(MOBILE STATION)

2 RECEIVING SIDE
(BASE STATION)

DATA →

EP 1 892 860 A2

# FIG. 13  PRIOR ART

11 RECEIVING SIDE
(MOBILE STATION)

12 TRANSMITTING SIDE
(BASE STATION)